# EUROPEAN PATENT APPLICATION

(11) **EP 1 223 445 A1**
(43) Date of publication of application: **17.07.2002**
(21) Application number: 01302475.7
(22) Date of filing: 19.03.2001
(51) Int. Cl.: G02B 6/38, G02B 6/36

(54) **Apparatus and method for interconnecting multi-dimensional optical fiber arrays**

(30) Priority: 08.09.2000 US 658150
(71) Applicant: LUCENT TECHNOLOGIES INC., Murray Hill, New Jersey 07974-0636 (US)
(72) Inventor: Shahid, Muhammed A., Snellville, Georgia 30078 (US)
(74) Representative: Schoppe, Fritz, Dipl.-Ing.

(57) **Abstract**

Embodiments of the invention include a method (30) for making a connector (20) for a multi-dimensional array of transmission media (24) such as optical fibers and/or electrical conductors. The transmission media connector includes a plug (22) formed around the end portions of the plurality of transmission media. The connector encapsulates and arranges the end portions of the plurality of transmission media into a multi-dimensional array of transmission media suitable for coupling between, e.g., transmission sources and receivers. The method (30) for making the connector (20) includes the steps of fixably aligning (34) the end portions of the transmission media, for example, with an alignment assembly, encapsulating (36) a portion of the aligned end portions of the transmission media, for example, by forming a curable molding material around a portion of the aligned end portions of the transmission media and curing the encapsulant material into a connector plug.

## Description

### Background of the Invention

### 1. Field of the Invention

The invention relates to connectors for transmission media such as optical fibers and electrical conductors, and methods and apparatus for making such connectors. More particularly, the invention relates to connectors for multi-dimensional arrays of transmission media, and methods and apparatus for making such connectors.

### 2. Description of the Related Art

The development of optical fiber connectors having greater density and alignment accuracy than conventional arrangements and connectors is an ever-increasing need within optical interconnection technology. The configuration of optical fiber connectors has improved from single fiber connectors such as ST and LC connectors to multi-fiber connectors suitable for operably coupling a linear array of optical fibers with another optical device.

With the development of optical devices having inputs and outputs with multi-dimensional arrays, concomitant interconnecting arrangements including optical cross-connects and switches between multi-dimensional optical arrays are needed accordingly. Also, there is a need for improved accuracy of such interconnections between multi-dimensional optical fiber arrays.

Conventional interconnection arrangements include connector pieces formed from inverse-replica v-groove molds made of, for example, silicon, or through-hole array connectors such as MT connectors. Once made, the connector pieces are assembled around various optical fiber arrangements, including arrangements having one or more optical fiber ribbon cables. However, such conventional arrangements are relatively expensive, for example, because of material costs and the costs associated with manufacturing such molds. Moreover, assembly of the connectors using such connector pieces is relatively difficult, especially as the connector pieces continue to be made smaller and smaller. Conventional connectors also suffer from misalignment that often exceeds acceptable tolerances.

It would be desirable to have available apparatus for optically connecting multi-dimensional optical arrays, methods for making such apparatus and systems employing such interconnections that are more accurate, reliable and cost-effective than conventional arrangements but also involve less assembly that is less difficult than conventional arrangements.

### Summary of the Invention

The invention is as defined by the claims. Embodiments of the invention include a method for making a connector for a multi-dimensional array of transmission media such as optical fibers and/or electrical conductors. The transmission media connector includes a plug formed around the end portions of the plurality of transmission media. The connector encapsulates and arranges the end portions of the plurality of transmission media into a multi-dimensional array of transmission media suitable for coupling between, e.g., transmission sources and receivers. The method for making the connector includes the steps of fixably aligning the end portions of the transmission media, for example, with an alignment assembly, forming a curable molding material around a portion of the aligned end portions of the transmission media, and curing the encapsulant material into a plug around the aligned end portions of the transmission media, thus forming the connector.

### Brief Description of the Drawings

In the drawings:
Fig. 1 is a simplified block diagram of a system for transmitting information, in which transmission media connectors according to embodiments of the invention are useful;
Fig. 2a is a perspective view of a transmission media connector according to an embodiment of the invention;
Fig. 2b is a perspective view of a transmission media connector according to another embodiment of the invention;
Fig. 3 is a simplified block diagram of a method for making a transmission media connector according to embodiments of the invention;
Fig. 4a is a perspective view of an alignment assembly according to an embodiment of the invention, showing a plurality of alignment assembly plates operably stacked with a corresponding plurality of ribbon cables such as optical fiber ribbon cables operably positioned therein;
Fig. 4b is a perspective view of an alignment assembly plate according to the alignment assembly configuration shown in Fig. 4a;
Fig. 4c is a perspective view of the alignment assembly plate of Fig. 4b shown with a ribbon cable such as an optical fiber ribbon cable positioned therein according to embodiments of the invention;
Fig. 5a is a perspective view of a mold for use with an alignment assembly according to embodiments of the invention;
Fig. 5b is a perspective view of upper and lower mold portions of the mold of Fig. 5a, which mold is for use with an alignment assembly according to embodiments of the invention;
Fig. 6a is a perspective view of an alignment assembly according to an alternative embodiment of the invention, showing a plurality of alignment assembly plates operably stacked with a corresponding plurality of ribbon cables such as optical fiber ribbon cables operably positioned therein;
Fig. 6b is a perspective view of an alignment assembly plate according to the alignment assembly configuration shown in Fig. 6a; and
Fig. 6c is a perspective view of the alignment assembly plate of Fig. 6b shown with a ribbon cable such as an optical fiber ribbon cable positioned therein according to embodiments of the invention.

### Detailed Description

In the following description similar components are referred to by the same reference numeral to simplify the sequential aspect of the drawings and to enhance the understanding of the invention through the description of the drawings.

Although specific features, configurations and arrangements are discussed hereinbelow, it should be understood that such is done for illustrative purposes only. A person skilled in the relevant art will recognize that other steps, configurations and arrangements are useful without departing from the spirit and scope of the invention.

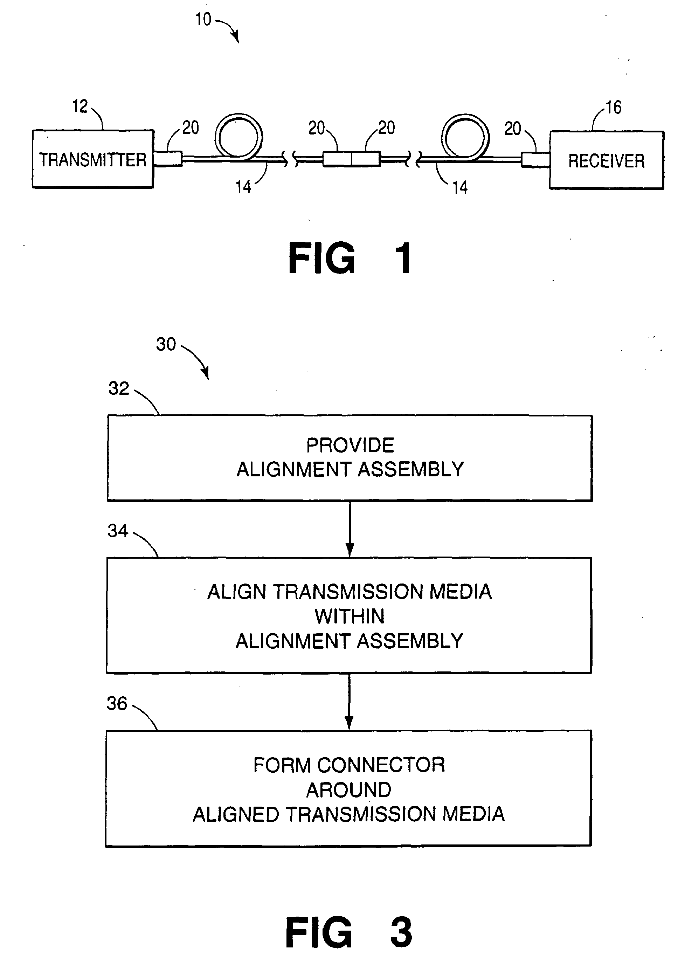

Referring now to Fig. 1, a simplified block diagram of an information transmission system 10 according to embodiments of the invention is shown. The information transmission system 10 includes one or more sources 12 for transmitting information, a transmission medium 14 and one or more receivers 16 for receiving the transmitted information. The source 12 is configured to transmit information such as optical information and/or electrical information. Similarly, the receiver 16 is configured to receive information such as optical information and/or electrical information transmitted from the source 12. The transmission medium 14 includes, for example, individual and/or arrayed optical fibers and/or electrical conductors, including ribbon cables or optical fibers and/or electrical conductors.

The source 12 is coupled to the transmission medium 14, for example, through one or more transmission media connectors 20. Also, one or more transmission media connectors 20 are useful in coupling the transmission medium 14 to the receiver 16 and to other segments of the transmission medium 14, for example, as shown. It should be understood that the connector arrangement shown in Fig. 1 is for illustrative purposes only and that other arrangements and configurations are within the scope of embodiments of the invention. For example, it is possible for the system 10 to include one segment of transmission media that couples at one end to the source 12 and couples at the other end to the receiver 16. Also, it is possible for the system 10 to have one or more portions of the transmission media 14 coupled to the source 12, the receiver 16, and/or to other segments of transmission media without the use of one or more transmission media connectors 20.

Referring now to Fig. 2a, shown is a perspective view of a transmission media connector 20 according to embodiments of the invention that is suitable for use in optical waveguide systems, for example, the information transmission system 10 shown in Fig. 1. The connector 20 includes a body or plug 22 formed around an array of transmission media 24. The body 22 is made from, for example, a cured molding material such as polyetherimid (PEI), liquid crystal polymers (LCPs) such as polyphynelene sulphite (PPS), polycarbonates (PCs) or other suitable encapsulant material. The body 22 is configured with an end face or front face 26 that arranges and exposes ends 28 of the transmission media 24, for example, into a multi-dimensional array.

As discussed hereinabove, the multi-dimensional array of transmission media 24 further comprise, for example, individual and/or arrayed optical fibers and/or electrical conductors. In the embodiment shown in Fig. 2a, the transmission media 24 is a plurality of optical fiber ribbon cables. However, such is for illustrative purposes only.

According to embodiments of the invention, the front face 26 of the connector 20 typically is planar with the ends 28 of the transmission media, especially if the transmission media 24 includes one or more optical fibers. In such embodiments, the ends 28 of the optical fibers and the front face 26 of the connector 20 typically are polished to a generally planar finish. Such a planar surface typically promotes more efficient coupling with other optical devices, including other connectors.

As shown, the individual members of the transmission media are arranged in a multi-dimensional array. For example, for transmission media such as optical fibers that are to be coupled via the connector 20 to optical devices such as optical sources, receivers, switches, cross-connect and other devices, the optical fibers are arranged according to typical spacing dimensions of, for example, optical ribbon cables. For example, because the (lateral) spacing between the center of adjacent optical fibers in a typical optical fiber ribbon cable is within the range from approximately 250 microns (µm) to approximately 1 millimeter (mm), the connector 20 is made to arrange the ends of the optical fibers accordingly. Moreover, with a plurality of optical fiber ribbon cables being alignably stacked, for example, as shown in Fig. 2a, the connector 20 positions the plurality of optical fiber ribbon cables such that the vertical spacing between the center of adjacent optical fibers is within the range from approximately 250 µm to approximately 1 mm.

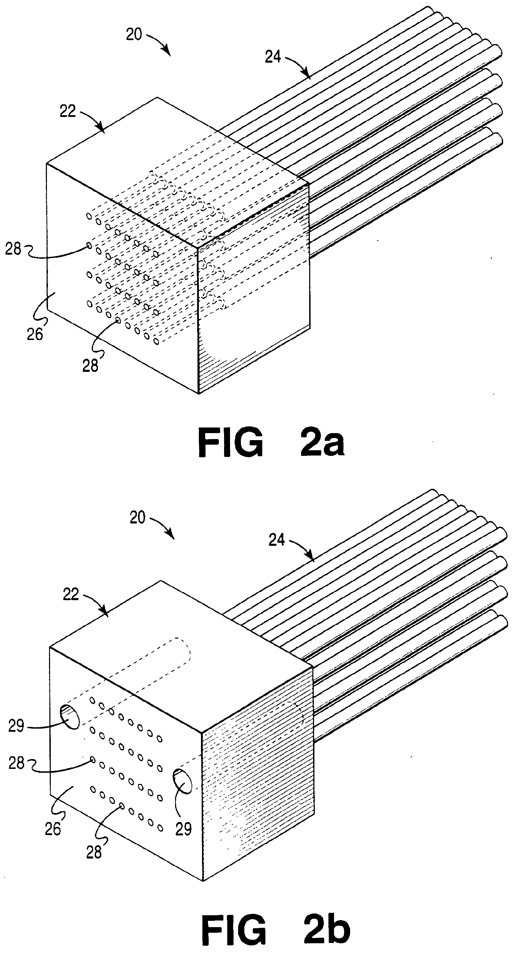

Referring now to Fig. 2b, the connector 20 includes, alternatively, one or more alignment pin features 29 or other features formed therein. The alignment pin features 29 are formed in the connector 20, for example, on either side of the multi-dimensional array of transmission media 24, and are dimensioned to receive an alignment pin (not shown). Alignment pins, when positioned in the alignment pin features 29, are useful in aligning the connector 20 with other optical devices having alignment pin features formed therein. Such optical devices include other information transmitting sources, receivers, and other transmission media connectors. Also. in addition to or instead of the alignment pin features 29, it is suitable for the connector 20 to have other features formed therein.

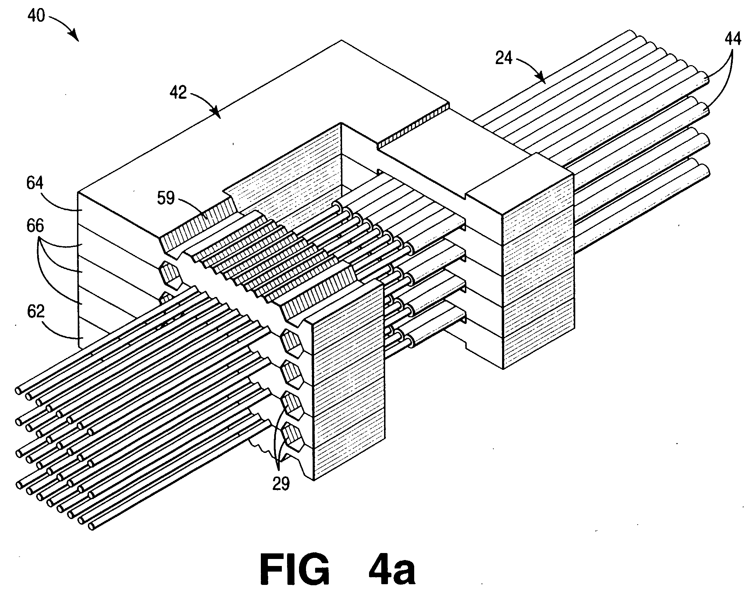

Referring now to Fig. 3, a simplified block diagram of a method 30 for making the transmission media connector 20 according to embodiments of the invention is shown. One step 32 of the method 30 is to provide an alignment assembly configured to fixably align the transmission media into a multi-dimensional array of transmission media. As discussed hereinabove, the transmission media is, for example, a plurality of individual optical fibers and/or electrical conductors and/or a plurality of arrayed optical and/or electrical transmission media, including ribbon cables.

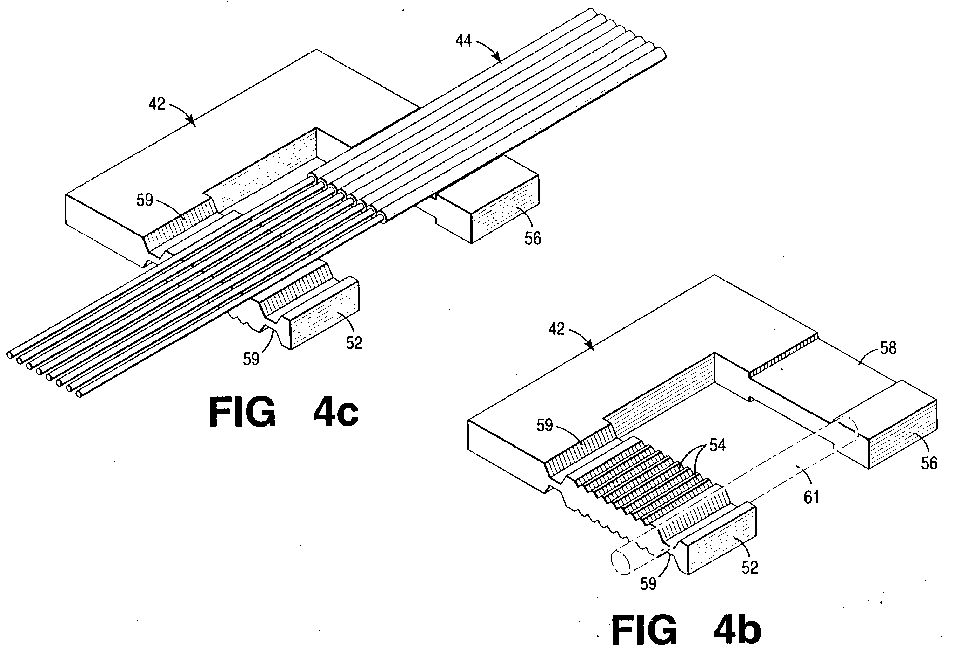

Although embodiments of the invention include any arrangement that fixably aligns the plurality of the transmission media in a suitable manner, one type of alignment assembly is shown, for example, in Figs. 4a-c. The alignment assembly 40 includes a plurality of stackable alignment assembly plates 42 in which a corresponding plurality of ribbon cables or other suitable linear arrays 44 of transmission media 24 are positioned therebetween. The alignment assembly plates 42 include alignment features formed therein that align the linear arrays 44 of transmission media 24 therebetween (see, for example, Fig. 4b).

For example, the alignment assembly plates include an alignment arm or region 52 having a plurality of v-grooves 54 or other alignment features formed on at least one side thereof. The v-grooves 54 have a desired lateral spacing for positioning the transmission media 24 therein (see, for example, Fig. 4c). The v-grooves 54 are especially suited for aligning therein transmission media such as ribbon cables.

According to alternative embodiments of the invention, the alignment assembly plates 42 also include a guiding arm or region 56 that includes, for example, one or more additional alignment guides 58 for further assistance in aligning the transmission media 24 in the alignment assembly plate 42. Also, alternatively, the alignment assembly plate 42 includes one or more alignment pin grooves 59, for example, on either side of the v-grooves 54. The alignment pin grooves 59 are dimensioned to receive an alignment pin 61, tube or other suitable instrument for forming alignment pin features 29 in the connector 20.

The alignment assembly plates 42 are made of, for example, nickel (Ni) or other suitable hard metal. The alignment assembly plates 42 are made by, for example, electroforming nickel or other suitable material over a master silicon (Si) chip having an inverse replica of the desired alignment features.

Another step 34 of the method 30 illustrated in Fig. 3 is to align the transmission media 24 within the alignment assembly 40. As shown in Figs. 4a-c, the alignment assembly 40 includes a lower outer assembly plate 62, an upper outer assembly plate 64 and one or more inner assembly plates 66 for positioning a multi-dimensional array of transmission media 24 therein. The outer assembly plates have alignment features formed in one or both sides thereof. The inner assembly plates 66 typically have alignment features formed in both sides of thereof. The number of inner assembly plates 66 used in the alignment assembly 40 depends on the desired size and dimensions of the transmission media array and its corresponding connector.

The alignment step 34 includes positioning one of the ribbon cables 44 or other suitable linear array portion of the multi-dimensional array of transmission media in the alignment features of the first or lower assembly plate 62. For transmission media such as optical fibers including optical fiber ribbon cables, the ends of the fibers are stripped of their protective coating prior to their being positioned in the assembly plate 42. Alternatively, for fibers having, for example, hard polyimide concentric thin coating (for example, 5-10 µm thick), their coatings need not be stripped prior to their being positioned in the assembly plate 42.

The inner assembly plate 66 is stacked or otherwise positioned on the lower alignment assembly plate 62, wherein the v-grooves of the two stacked assembly plates fixably align the ribbon cable 44 therebetween. That is, the v-grooves on the top side of the lower assembly plate 62 and the v-grooves on the bottom side of the inner assembly plate 66 are configured to fixably align the ribbon cable 44 therebetween when the inner assembly plate 66 is stacked on the lower assembly plate 62.

A second ribbon cable or linear array portion of the transmission media is positioned in the v-grooves on the top side of the inner assembly plate 66, for example, in a manner similar to the positioning of the previous ribbon cable on the lower assembly plate 62. Another assembly plate is stacked or otherwise positioned on the second ribbon cable and the underlying assembly plate upon which the second ribbon cable is positioned. The other assembly plate is, for example, another inner assembly plate 66 or a top or upper outer assembly plate 64.

The number of inner assembly plates 66 used in the alignment assembly 40 depends on the desired number of linear arrays 44 of transmission media within the multi-dimensional array of transmission media 24. For example, in the arrangement shown in Fig. 4a, in which the transmission media 24 includes four ribbon cables or other linear arrays 44, the alignment assembly 40 includes a lower assembly plate 62, an upper assembly plate 64 and three (3) inner assembly plates 66.

The lateral spacing between the individual members of the transmission media is established by the configuration of the v-grooves or other alignment features in the assembly plates 42. For example, when used with optical fiber ribbon arrays, the assembly plates 42 are made with v-grooves that correspond to the lateral distance between adjacent optical fibers. Thus, in such arrangement, the spacing between the v-grooves is, for example, within the range from approximately 250 µm to approximately 1 mm center-to-center.

The vertical spacing between individual members of the transmission media is established by the thickness of the one or more inner assembly plates 66. For example, when used with optical fiber ribbon arrays, the thickness of the inner assembly plates 66 are such that, when the optical fiber ribbon arrays are positioned in the v-grooves, the vertical spacing between adjacent optical fibers is, for example, within the range from approximately 250 µm to approximately 1 mm center-to-center.

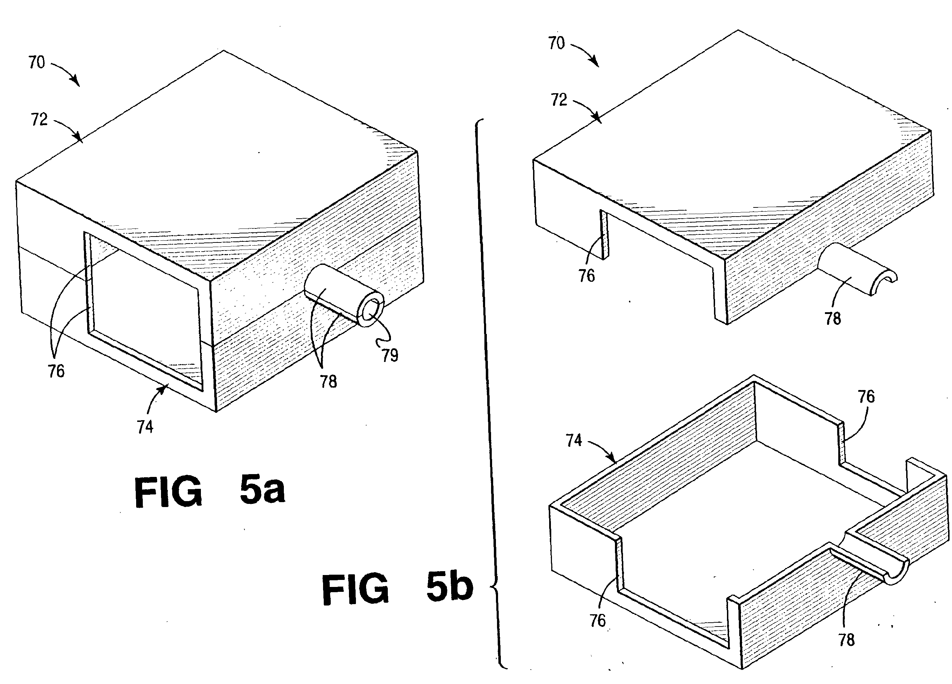

Another step 36 of the method 30 illustrated in Fig. 3 is to form a connector around the fixably aligned portion of the transmission media 24. The connector forming step 36 includes positioning a mold or other suitable structure around the alignment assembly 40 (and thus the portion of the transmission media around which the connector is to be formed), and filling the mold with a molding material that forms the connector 20. Referring now to Figs. 5a-b, shown are perspective views of a mold 70 including an upper mold portion 72 and a lower mold portion 74. The mold portions 72, 74 are shown separated (Fig. 5b) and operably coupled together (Fig. 5a) as the mold 70.

The mold portions 72, 74 are configured to allow the mold 70 made therefrom to fit over the alignment assembly 40 and define an enclosed moldspace therearound, yet also allow the transmission media 24 to pass therethrough. For example, the upper and lower mold portions 72, 74 have one or more cut-out regions 76 that, when the mold portions 72, 74 are coupled together to form the mold 70, form one or more openings that allow one and/or both ends of the transmission media 24 to pass through the mold 70. Thus, the relative positioning of the members of the transmission media 24 as established by the alignment assembly 40 are not disturbed when the mold 70 is operably positioned around the alignment assembly 40. Furthermore, the mold 70 is configured to urge or maintain the stacked arrangement of the assembly plates 42.

Once the mold 70 is formed around the alignment assembly 40 and the portion of the transmission media fixably aligned by the alignment assembly 40, a curable molding material is injected or otherwise introduced into the mold 70. For example, the upper and lower mold portions 72, 74 have one or more extensions 78 that, when the mold portions 72, 74 are coupled together to form the mold 70, form one or more ports 79 that allow entry of the curable molding material into the mold 70. Suitable molding materials include, for example, polyetherimid (PEI), liquid crystal polymers (LCPs) such as polyphynelene sulphite (PPS), polycarbonates (PCs) or other suitable encapsulant material. The molding material forms around the portions of the transmission media fixably aligned by the alignment assembly 40, and is cured in such a way that it encapsulates the fixably aligned ends of the transmission media 24. For example, molding materials injected into the mold at elevated temperatures typically are cured or hardened by cooling to room temperature.

Once the molding material has been cured, the mold 70 is removed, for example, by separating the upper and lower mold portions 72, 74. At this point, the relative position of the individual transmission media members is maintained by the connector plug 22 formed by the cured molding material. The alignment assembly 40 also is removed, for example, by removing the individual alignment assembly plates 42 from around the now-encapsulated multi-dimensional array of transmission media 24. In this manner, the alignment assembly plates 42 are suitable for re-use as an alignment assembly to fixably align subsequent multi-dimensional arrays of transmission media.

Once the mold 70 and the alignment assembly plates 42 have been removed from the connector plug 22, the end face 26 of the plug 22 (referring back to Fig. 2a) is prepared as desired. For example, the excess portions of the array of transmission media 24 extending out of the end face 26 are trimmed. Also, for example, the end face 26 of the plug 22 is polished in such a way that the ends 28 of the transmission media 24 protrude outward slightly, for example, 1-2 µm, from the end face 26 of the plug 22. Alternatively, the end face 26 of the plug 22 is polished to form a relatively smooth surface in which the ends 28 of the individual members of the array of transmission media 24 are substantially planar with the end face 26 of the plug 22 or are slightly recessed from the end face 26 of the plug 22.

With respect to the alignment pin features 29 formed in the assembly plates 42 (for example, referring back to Fig. 4a), alignment rods (not shown) are positioned in the alignment pin features 29 prior to the introduction of the molding material into the mold 70. For example, the alignment rods are positioned in the alignment pin features 29 as the assembly plates 42 are being stacked or, alternatively, the alignment pins are inserted in the alignment pin features 29 after the alignment assembly 40 has been formed. The alignment pin rods extend beyond the alignment features 29 formed in the assembly plates 42 and into the opening in the alignment assembly 40 between the stacked alignment arms 52 and the stacked guiding arms 56 (that is, where the connector plug ultimately is formed).

Thus, the molding material forming around the portions of the transmission media in the opening of the alignment assembly 40 also forms around the portions of the alignment pins extending into the opening of the alignment assembly 40. Once the molding material is cured, for example, as discussed hereinabove, the alignment pin rods are removed, resulting in the alignment pin features being formed in the connector plug 22, for example, as shown in Fig. 2b. Alternatively, alignment pin tubes (not shown) dimensioned to receive alignment pins are positioned in the alignment pin features 29, for example, in a manner similar to the alignment pins. However, unlike the alignment pin rods, which are removed upon curing the molding material, the alignment pin tubes remain embedded in the connector plug 22 to provide an alignment feature for receiving alignment pins, for example, when the connector plug 22 is to be coupled to other devices.

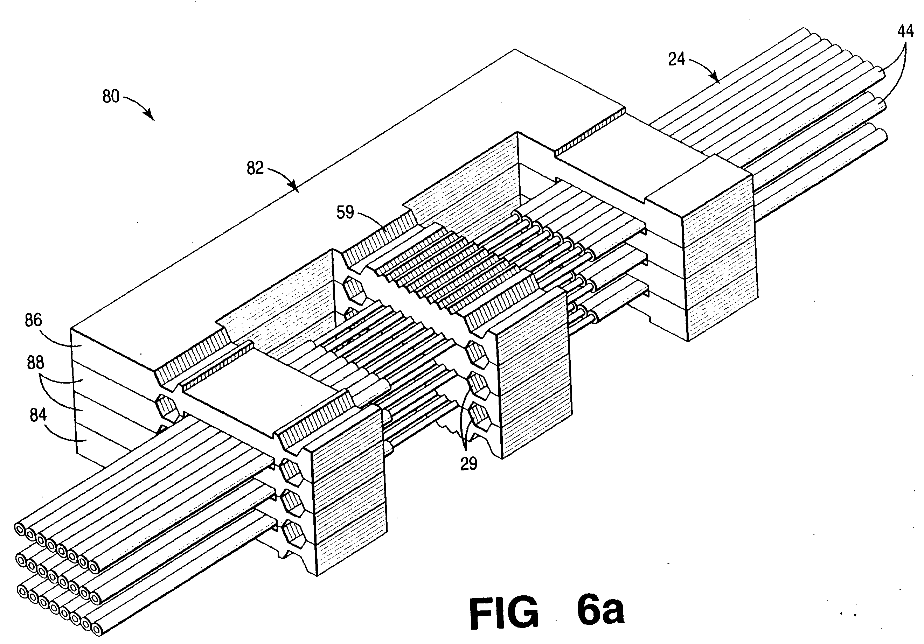

Referring now to Figs. 6a-c, shown are perspective views of various stages of the manufacture of an alignment assembly according to an alternative embodiment of the invention. In this embodiment, the alternative alignment assembly 80 includes a plurality of stackable alignment assembly plates 82 with an alignment arm or region 52 and a pair of guiding arms or regions 56, for example, on either side of the alignment arm 52. Such alternative embodiment compares with the alignment assembly 40 shown in Figs 4a-c that has a single guiding arm 56.

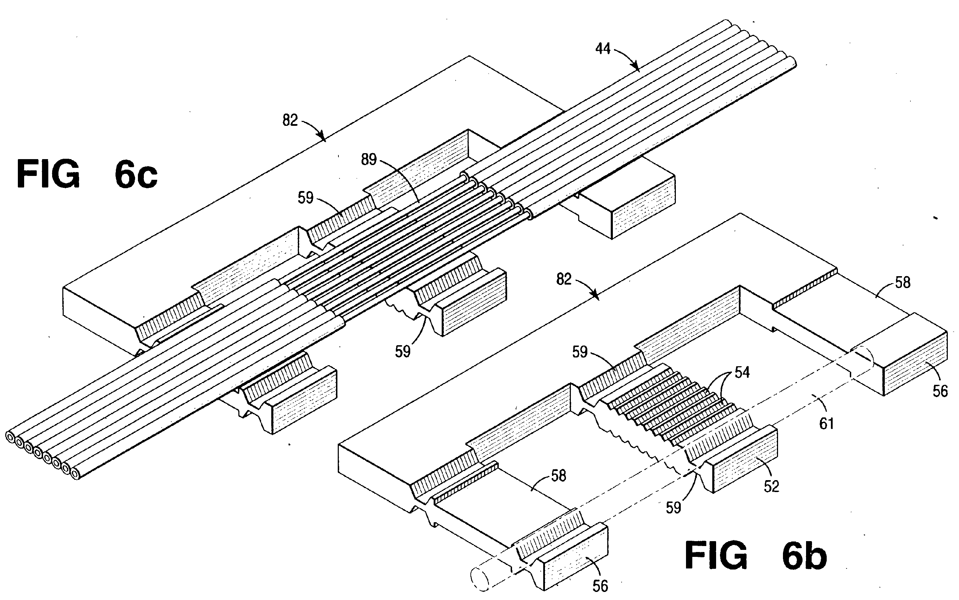

Referring again to Figs. 6a-c, the alignment arm 52 includes a plurality of v-grooves 54 or other alignment features formed on at least one side thereof. In this alternative embodiment, the v-grooves 54, which have a desired lateral spacing for positioning therein the transmission media, are especially suited for aligning therein transmission media such as ribbon cables or other linear arrays of transmission media. Also, alternatively, the alignment arm 52 includes one or more alignment pin grooves 59 formed therein, for example, on either side of the v-grooves 54 (see, for example, Fig. 6b). The pair of guiding arms 56 include additional alignment guides 58 for further assistance in aligning the transmission media 24 in the alignment assembly plate 82.

As with previously-discussed embodiments, in this alternative embodiment, the alignment assembly 80 includes a lower outer assembly plate 84, an upper outer assembly plate 86 and one or more inner assembly plates 88. The outer assembly plates have alignment features such as v-grooves and alignment guides formed in one or both sides thereof; the inner assembly plates 88 typically have alignment features and alignment guides formed in both sides of thereof. Also, the number of inner assembly plates 88 used in the alignment assembly 80 depends on the desired size and dimensions of the transmission media array and its corresponding connector.

In this alternative embodiment, the linear arrays 44 of transmission media 24 are positioned in the alignment features of the alignment arm 52 and the alignment guides 58 of the guiding arms 56, for example, as shown in Fig. 6c. Such positioning typically includes the placement of a ribbon cable or other suitable linear array of transmission media in the v-grooves 54 and alignment guides 58 of the lower assembly plate 84. For transmission media such as optical fibers including optical fiber ribbon cables, a middle portion 89 of the fibers are stripped of their protective coating prior to their being positioned in the lower assembly plate 84. However, no stripping is done, for example, for fibers having hard polyimide concentric thin coating (for example, 5-10 µm thick).

An inner assembly plate 88 is stacked or otherwise positioned on the lower alignment assembly plate 84 in such a way that the v-grooves 54 and the alignment guides 58 of the two stacked assembly plates fixably align the ribbon cable therebetween. A second ribbon cable or other linear array 44 of transmission media 24 is positioned in the v-grooves 54 on the top side of the inner assembly plate 88, for example, in the manner just discussed in connection with the positioning of a ribbon cable on the lower assembly plate 84. Another assembly plate, for example, another inner assembly plate 88 or the top assembly plate 86, is stacked or otherwise positioned on the second ribbon cable and the underlying assembly plate upon which the second ribbon cable is positioned, for example, in the manner just discussed in connection with an inner assembly plate 88 being positioned on the lower assembly plate 84. Such stacking or positioning of assembly plates continues until the alignment assembly 80 is configured as desired. For example, in the embodiment shown in Fig. 6a, the transmission media 24 includes three (3) ribbon cables or other linear arrays, and the alignment assembly 80 includes the lower assembly plate 84, the upper assembly plate 86 and two (2) inner assembly plates 88.

According to the particular embodiment of the invention shown in Figs. 6a-c, once the alignment assembly 80 is formed, a suitable mold (for example, the mold shown in Figs. 5a-b and discussed previously hereinabove) is operably positioned around the alignment assembly 80. Once the mold is operably positioned around the alignment assembly 80, molding material is introduced into the mold, for example, through a port in the mold. It should be noted that, with the particular configuration of the assembly plates shown in this alternative embodiment, a pair of moldspaces are defined when the mold is positioned around the alignment assembly. In this manner, when the molding material is cured and the mold is removed, a pair of connector plugs have been formed to fixably align the transmission media at two separate locations. That is, a first connector plug is disposed between the alignment arm 52 and one of the guiding arms 56 and a second connector plug is disposed between the alignment arm 52 and the other one of the guiding arms 56. Both connector plugs maintain the relative position of the individual transmission media members.

Once the mold is removed from the alignment assembly 80, the individual alignment plates are removed from around the connector plugs and the encapsulated transmission media. The portion of the transmission media between the two connector plugs (which, as discussed previously, typically is stripped of its protective coating) serves as a sacrificial region that subsequently is broken, thus yielding two separate connector plugs. The end faces of the two connector plugs are prepared, for example, in a manner similar to that discussed hereinabove in connection with connector end faces of previously-discussed embodiments of the invention. That is. the excess portions of the sacrificial region are trimmed from the end faces of the two connector plugs. Also, the end faces of the two connector plugs are polished to form a relatively smooth surface suitable for coupling to other devices.

It is within the scope of embodiments of the invention to configure the alignment assembly plates to establish the lateral spacing between the ends of transmission media such as optical fibers. Similarly, the vertical height or thickness of the inner alignment assembly plates affects the vertical spacing between the ends of optical fibers and other transmission media. In arrangements in which the desired vertical spacing reduces the thickness of the inner alignment plates to the extent that the reduced thickness affects the stability of the alignment assembly plates, alternative arrangements are used. Such alternative arrangements include assembly plates that, when operably stacked together to position the transmission media and allow formation of the transmission media connector body, have a staggered arrangement, for example, for stability.

It will be apparent to those skilled in the art that many changes and substitutions can be made to the embodiments of the multi-dimensional transmission media connectors and methods for making herein described without departing from the scope of the invention as defined by the appended claims.

## Claims

1. A method (30) for making a connector (20) for a multi-dimensional array of transmission media (24), the method comprising the step of:
fixably aligning (34) a plurality of transmission media into a multi-dimensional array of transmission media,
**CHARACTERIZED IN THAT**
the method includes the steps of
forming a curable molding material around a portion of the multi-dimensional array of transmission media, and
curing the molding material to form (34) a plug (22) around the multi-dimensional array of transmission media, wherein the cured molding material encapsulates the relative position of the transmission media of the multi-dimensional array of optical fibers established by the aligning step.

2. The method as recited in claim 1, wherein the aligning step further comprises positioning the plurality of transmission media in an alignment assembly (40).

3. The method as recited in claim 1, wherein the alignment assembly further comprises a lower assembly plate, an upper assembly plate and at least one inner assembly plate, and wherein the aligning step further comprises positioning a first linear array of optical-fibers between the lower assembly plate and the at least one inner assembly plate and positioning a second linear array of optical fibers between the at least one inner assembly plate and the upper assembly plate, wherein the assembly plates are configured to fixably align the first and second linear arrays of optical fibers with respect to one another.

4. The method as recited in claim 1, wherein the at least one inner assembly plate further comprises a plurality of inner assembly plates, and wherein the aligning step further comprises positioning a corresponding plurality of linear arrays of transmission media between the plurality of inner assembly plates, wherein the assembly plates are configured to fixably align the plurality of linear arrays of transmission media into a multi-dimensional array of transmission media.

5. The method as recited in claim 1, further comprising the step of removing the mold assembly from the multi-dimensional array of transmission media once the molding material has cured.

6. The method as recited in claim 1, further comprising the step of polishing the plug in such a way that at least one surface thereof is suitable for interconnecting the multi-dimensional array of transmission with another transmission device.

7. A method (30) for making an optical fiber connector (20), comprising the steps of:
providing (32) an alignment assembly (40) configured to fixably align a plurality of linear optical fiber arrays into a multi-dimensional array of optical fibers and form a molding cavity for receiving a molding material therein; and
positioning (34) the plurality of linear arrays of optical fibers (24) in the alignment assembly
**CHARACTERIZED IN THAT**
the method includes the step of encapsulating (36) the plurality of linear arrays with a plug (22) formed by the molding material, wherein the plug and the plurality of linear arrays further comprise the optical fiber connector.

8. The method as recited in claim 7, wherein the encapsulating step further comprises the steps of:
forming a mold around at least a portion of the alignment assembly;
introducing the molding material into the mold cavity through the mold in such a way that the molding material forms around the plurality of linear arrays;
curing the molding material in such a way that the cured molding material forms the plug; and
removing the mold and the alignment assembly from the plug.

9. An apparatus (40) for making a connector for a multi-dimensional array of transmission media, comprising:
a first outer assembly plate (62) having a plurality of alignment features formed in at least a first side thereof;
a second outer assembly plate (64) having a plurality of alignment features formed in at least a first side thereof; and
at least one inner assembly plate (66) configured for coupling between the first and second outer assembly plates, the inner assembly plate having a first plurality of alignment features formed in a first side thereof and a second plurality of alignment features formed in a second side thereof,
wherein the first outer assembly plate, the second outer assembly plate and the at least one inner assembly plate, when coupled together, fixably position a plurality of transmission media into a multi-dimensional array of transmission media,
**CHARACTERIZED IN THAT**
the first outer assembly plate, the second outer assembly plate and the at least one inner assembly plate, when coupled together, provide for a molding material to be formed around the multi-dimensional array of transmission media, the molding material forming a plug around the multi-dimensional array of transmission media that further comprises the connector.
